(19) Europäisches Patentamt
European Patent Office
Office européen des brevets

(11) EP 4 592 410 A1

(12) EUROPEAN PATENT APPLICATION
published in accordance with Art. 153(4) EPC

(43) Date of publication:
30.07.2025 Bulletin 2025/31

(21) Application number: 23868206.6

(22) Date of filing: 20.09.2023

(51) International Patent Classification (IPC):
C21D 8/12 (2006.01)    C22C 38/00 (2006.01)
C22C 38/60 (2006.01)    H01F 1/147 (2006.01)

(52) Cooperative Patent Classification (CPC):
C22C 38/00; C22C 38/60; H01F 1/147; C21D 8/12;
Y02P 10/20

(86) International application number:
PCT/JP2023/034057

(87) International publication number:
WO 2024/063085 (28.03.2024 Gazette 2024/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.09.2022 JP 2022151497

(71) Applicant: NIPPON STEEL CORPORATION
Chiyoda-ku
Tokyo 100-8071 (JP)

(72) Inventors:
• FUKUCHI, Minako
Tokyo 100-8071 (JP)
• NATORI, Yoshiaki
Tokyo 100-8071 (JP)
• MURAKAWA, Tesshu
Tokyo 100-8071 (JP)

(74) Representative: Vossius & Partner
Patentanwälte Rechtsanwälte mbB
Siebertstrasse 3
81675 München (DE)

(54) **NON-ORIENTED ELECTROMAGNETIC STEEL SHEET**

(57) The non-oriented electrical steel sheet according to the present invention includes a composition in which $\alpha$-$\gamma$ transformation can occur, and the composition contains Ti: 0.0001% ~ 0.0050%, and when an area ratio of crystal grains in a {hkl}<uvw> orientation (within a tolerance of 10°) to the entire visual field when a steel sheet surface is measured by a scanning electron microscope equipped with electron back scattering diffraction (SEM-EBSD) is represented as Ahkl-uvw, A411-011 is 15% or more, and the number density of precipitates is 0.5 pieces/$\mu$m$^2$ ~ 50 pieces/$\mu$m$^2$.

**Description**

TECHNICAL FIELD

The present invention relates to a non-oriented electrical steel sheet. This application is based upon and claims the benefit of priority of the prior Japanese Patent Application No. 2022-151497, filed on September 22, 2022, the entire contents of which are incorporated herein by reference.

BACKGROUND ART

Electrical steel sheets are used as a raw material for cores (iron cores) of electrical devices. Examples of electrical devices include drive motors mounted in automobiles, various compressor motors such as those used in air conditioners and refrigerators, household or industrial generators, and so on. These electrical devices are required to achieve high energy efficiency, miniaturization, and high output. Therefore, the electrical steel sheets used as the cores of the electrical devices are required to be low in core loss and high in magnetic flux density. One solution is texture control, and there has been proposed so far a technique to develop a structure ($\alpha$-fiber) that has an easy magnetization axis within a sheet surface of a steel sheet, is advantageous for improving magnetic properties, and is capable of relatively easily increasing accumulation by rolling processes in hot rolling and cold rolling, which are essential steps for steel sheet manufacture. Specifically, a structure whose <110> direction is substantially parallel to a rolling direction (RD) is formed.

Patent Literatures 1 to 3 all have disclosed a method of developing the {100}<011> orientation, and have described that the transformation temperature is lowered and rapid cooling is performed after hot rolling to refine a structure.

Specifically, Patent Literature 1 has described that within 3 seconds after hot rolling, cooling is performed down to 250°C or lower at a cooling rate of 200°C/second or more and that without performing annealing between hot rolling and cold rolling, a cumulative reduction ratio in cold rolling is set to 88% or more. This makes it possible to manufacture an electrical steel sheet accumulated in the {100}<011> orientation in the steel sheet surface.

Further, Patent Literature 2 has disclosed a method of manufacturing an electrical steel sheet containing 0.6 mass% or more and 3.0 mass% or less of Al, and has described that an electrical steel sheet whose {100}<011> orientation is accumulated in the steel sheet surface can be manufactured by the same steps as the method described in Patent Literature 1.

Meanwhile, Patent Literature 3 has described that the finish rolling temperature in hot rolling is set to be equal to or higher than the Ac3 transformation point and cooling is performed down to a steel sheet temperature of 250°C within 3 seconds after hot rolling, or that the finish rolling temperature is set to be equal to or lower than the Ac3 transformation point - 50°C and cooling is performed at a cooling rate equal to or more than that of standing-to-cool. Further, in the manufacturing method described in Patent Literature 3, cold rolling is performed two times with intermediate annealing performed therebetween, annealing is not performed between hot rolling and the first cold rolling, and a cumulative reduction ratio is 5 to 15% in the second cold rolling. This makes it possible to manufacture an electrical steel sheet accumulated in the {100}<011> orientation in the steel sheet surface.

In any of the methods described in Patent Literatures 1 to 3, in the case where the finish rolling temperature in hot rolling is set to the Ac3 point or higher when manufacturing the electrical steel sheet accumulated in the {100}<011> orientation in the steel sheet surface, rapid cooling immediately thereafter is required. When the rapid cooling is performed, a cooling load after hot rolling increases. When considering operational stability, it is preferable to be able to reduce the load on a rolling mill where cold rolling is performed.

Meanwhile, in order to improve magnetic properties, a technique has also been proposed to develop the {411} orientation rotated by 20° from the {100} orientation. As a method of developing the {411} orientation, Patent Literatures 4 to 7 all have disclosed a technique to develop the {411} orientation, and have described that the grain diameter in a hot-rolled sheet is optimized and the $\alpha$-fiber in a texture of the hot-rolled sheet is strengthened.

Specifically, Patent Literature 4 has described that cold rolling is performed on a hot-rolled sheet whose degree of accumulation of the {211} orientation is higher than that of the {411} orientation and the cumulative reduction ratio in the cold rolling is set to 80% or more. This makes it possible to manufacture an electrical steel sheet accumulated in the {411} orientation in the steel sheet surface.

Further, Patent Literatures 5 and 6 have described that the slab heating temperature is set to 700°C or higher and 1150°C or lower, the starting temperature of finish rolling is set to 650°C or higher and 850°C or lower, the finishing temperature of the finish rolling is set to 550°C or higher and 800°C or lower, and further, the cumulative reduction ratio in cold rolling is set to 85 to 95%. This makes it possible to manufacture an electrical steel sheet accumulated in the {100} orientation and the {411} orientation in the steel sheet surface.

Meanwhile, Patent Literature 7 has described that when the $\alpha$-fiber is developed to the vicinity of a steel sheet surface layer in a hot-rolled coil steel sheet by strip casting or the like, the {h11}<1/h12> orientation, particularly, the {100}<012> to {411}<148> orientations are recrystallized by subsequent annealing of a hot-rolled sheet.

As a result of the examination of the above-described techniques, the present inventors found out that when the {100}<011> orientation is strengthened to improve the magnetic properties in accordance with Patent literatures 1 to 3, rapid cooling immediately after hot rolling is required, which causes a problem of a high manufacturing load. Further, they recognized that when the steel sheet in which the {100}<011> orientation has been strengthened is used as a material for an interlocking core, core properties as expected from the raw material are not obtained in some cases. As a result of examining the cause of this, it was considered that the {100}<011> orientation is responsible for a large change in magnetic properties in response to stress, specifically a large deterioration of magnetic properties (stress sensitivity) when compressive stress is applied.

In addition, they found out that in the techniques of Patent Literatures 4 to 7, although the {411} orientation is developed, the accumulation of an in-plane orientation in the <011> orientation is weak, and the magnetic properties in the 45° direction relative to the rolling direction of the steel sheet, which are characteristics of the $\alpha$-fiber, are not sufficiently high. The fact that the in-plane orientation is not aligned with the <011> orientation, namely, there is a large deviation from the $\alpha$-fiber, was a factor that inhibits accumulation in the {411} orientation as a plane orientation, and it was considered that this may be the reason why the magnetic properties are not sufficiently improved.

Further, when the non-oriented electrical steel sheet is used for a rotor of a motor, not only high magnetic flux density but also high strength is required due to high speed rotation involved. In order to achieve high strength and high magnetic flux density, the development of the {100} plane, which is advantageous for improving magnetic properties through texture control, has been considered. In the conventional techniques, the {100} plane has been developed through special processes such as cold rolling at a high reduction ratio of over 95% and vacuum annealing for over 10 hours, and cost reduction has been required in industrial production.

CITATION LIST

PATENT LITERATURE

Patent Literature 1: Japanese Laid-open Patent Publication No. 2017-145462
Patent Literature 2: Japanese Laid-open Patent Publication No. 2017-193731
Patent Literature 3: Japanese Laid-open Patent Publication No. 2019-178380
Patent Literature 4: Japanese Patent No. 4218077
Patent Literature 5: Japanese Patent No. 5256916
Patent Literature 6: Japanese Laid-open Patent Publication No. 2011-111658
Patent Literature 7: Japanese Laid-open Patent Publication No. 2019-183185

SUMMARY OF INVENTION

TECHNICAL PROBLEM

In consideration of the above-described problems, an object of the present invention is to provide a non-oriented electrical steel sheet that has achieved both high strength and high magnetic flux density without increasing a manufacturing load.

SOLUTION TO PROBLEM

The present inventors conducted intensive research to solve the above-described problems. As a result, it became clear that it is important to optimize the chemical composition, the grain diameter after hot rolling, and the reduction ratio in cold rolling. Specifically, it is important to facilitate the development of crystal grains in the {411}<011> orientation, which do not easily develop normally, by, based on the $\alpha$-$\gamma$ transformation system chemical composition, optimizing the grain diameter by performing cooling under predetermined conditions after hot rolling, and further performing cold rolling at a predetermined reduction ratio, controlling the temperature of intermediate annealing within a predetermined range, and further performing a second cold rolling at an appropriate reduction ratio and then performing annealing. As a result of having conducted further intensive research based on these findings, the present inventors have reached the following aspects of the invention.

(1) A non-oriented electrical steel sheet, includes a chemical composition containing:

in mass%,

C: 0.010% or less;
Si: 1.50% ~ 4.00%;
sol. Al: 0.0001% ~ 1.0000%;
S: 0.010% or less;
N: 0.0005% ~ 0.0100%;
Ti: 0.0010% ~ 0.0050%;
one or more selected from the group consisting of Mn, Ni, and Cu: 2.50% ~ 5.00% in total;
Co: 0.000% ~ 1.000%;
Sn: 0.000% ~ 0.400%;
Sb: 0.000% ~ 0.400%; and
P: 0.000% ~ 0.400%, and
satisfying (1) Expression below when the Mn content (mass%) is set to [Mn], the Ni content (mass%) is set to [Ni], the Cu content (mass%) is set to [Cu], the Si content (mass%) is set to [Si], the sol. Al content (mass%) is set to [sol. Al], and the P content (mass%) is set to [P], and
having a balance consisting of Fe and impurities, in which
when an area ratio of crystal grains in a {hkl}<uvw> orientation (within a tolerance of 10°) to the entire visual field when a steel sheet surface is measured by a scanning electron microscope equipped with electron back scattering diffraction (SEM-EBSD) is represented as Ahkl-uvw, A411-011 is 15% or more, and
the number density of precipitates is 0.5 pieces/$\mu$m$^2$ ~ 50 pieces/$\mu$m$^2$.

$$(2 \times [Mn] + 2.5 \times [Ni] + [Cu]) - ([Si] + 2 \times [sol. Al] + 4 \times [P]) \geq 1.5\% \tag{1}$$

ADVANTAGEOUS EFFECTS OF INVENTION

According to the present invention, it is possible to provide a non-oriented electrical steel sheet that has achieved both high strength and high magnetic flux density without increasing a manufacturing load.

DESCRIPTION OF EMBODIMENTS

There will be explained an embodiment of the present invention in detail below.
First, there is explained a chemical composition of a non-oriented electrical steel sheet according to the embodiment of the present invention and a steel material used in its manufacturing method and a cold-rolled steel sheet used for manufacturing the non-oriented electrical steel sheet. In the following explanation, "%", which is the unit of content of each element contained in the non-oriented electrical steel sheet or steel material, means "mass %" unless otherwise specified. Furthermore, a numerical value range expressed using "~" means the range that includes numerical values described before and after "~" as the lower limit value and the upper limit value.
The non-oriented electrical steel sheet according to this embodiment, the cold-rolled steel sheet, and the steel material include a chemical composition in which ferrite-austenite transformation (hereinafter, $\alpha$-$\gamma$ transformation) can occur, the chemical composition containing C: 0.010% or less, Si: 1.50% ~ 4.00%, sol. Al: 0.0001% ~ 1.0000%, S: 0.010% or less, N: 0.0005% ~ 0.0100%, Ti: 0.0010% ~ 0.0050%, one or more selected from the group consisting of Mn, Ni, and Cu: 2.50% ~ 5.00% in total, Co: 0.000% ~ 1.000%, Sn: 0.000% ~ 0.400%, Sb: 0.000% ~ 0.400%, and P: 0.000% ~ 0.400%, with a balance consisting of Fe and impurities. Further, the contents of Mn, Ni, Cu, Si, sol. Al, and P satisfy later-described predetermined conditions. Examples of the impurities include those contained in raw materials such as ores and scrap, and those contained in the manufacturing process.

(C: 0.010% or less)

C increases core loss and causes magnetic aging due to precipitation of fine carbides to cause inhibition of grain growth. Therefore, a lower C content is better. Such a phenomenon is significant when the C content is greater than 0.010%. Therefore, the C content is set to 0.010% or less. Incidentally, the lower limit of the C content is not limited in particular, but in consideration of the cost of a decarburization treatment during smelting, it is preferably set to 0.0005% or more.

(Si: 1.50% ~ 4.00%)

Si increases electrical resistance, reduces eddy current loss, reduces core loss, and increases a yield ratio to improve punchability of an iron core. When the Si content is less than 1.50%, these effects cannot be fully obtained. Therefore, the Si content is set to 1.50% or more. On the other hand, when the Si content is greater than 4.00%, the magnetic flux density decreases, the punchability decreases due to an excessive increase in hardness, and performing cold rolling becomes difficult. Therefore, the Si content is set to 4.00% or less.

(sol. Al: 0.0001% ~ 1.0000%)

sol. Al increases electrical resistance, reduces eddy current loss, and reduces core loss. sol. Al also contributes to improvement in relative magnitude of a magnetic flux density B50 relative to a saturation magnetic flux density. Here, the magnetic flux density B50 is a magnetic flux density in a magnetic field of 5000 A/m. When the sol. Al content is less than 0.0001%, these effects cannot be fully obtained. In addition, sol. Al also has a desulfurization-promoting effect in steelmaking. Therefore, the sol. Al content is set to 0.0001% or more. On the other hand, when the sol. Al content is greater than 1.0000%, the magnetic flux density decreases, the yield ratio decreases, and the punchability decreases. Therefore, the sol. Al content is set to 1.000% or less. Further, when the sol. Al content is in the range of 0.0100% ~ 0.1000%, AlN precipitates to inhibit the grain growth, resulting in a large core loss deterioration amount, and therefore it is preferable to avoid this concentration range.

(S: 0.010% or less)

S is not an essential element and is contained, for example, in steel as an impurity. S inhibits recrystallization and crystal grain growth during annealing due to precipitation of fine MnS. Therefore, a lower S content is better. The increase in core loss and the decrease in magnetic flux density due to such inhibition of recrystallization and crystal grain growth are significant when the S content is greater than 0.010%. Therefore, the S content is set to 0.010% or less. Incidentally, the lower limit of the S content is not limited in particular, but in consideration of the cost of a decarburization treatment during smelting, it is preferably set to 0.0003% or more.

(N: 0.0005% ~ 0.0100%)

N deteriorates magnetic properties through formation of fine precipitates of TiN, AlN, and the like, and thus the N content is set to 0.0100% or less. Incidentally, the lack of TiN being a precipitate results in a lack of strength, and thus the N content is set to 0.0005% or more. The N content is preferably 0.0010% or more.

(Ti: 0.0010% ~ 0.0050%)

Ti is an element necessary for solid-solution strengthening and grain refining strengthening. When the Ti content is less than 0.0010%, these effects cannot be fully obtained. Further, when the Ti content exceeds 0.0050%, a large amount of TiN being a fine precipitate is formed to deteriorate magnetic properties. Therefore, the Ti content is set to 0.0010% ~ 0.0050%. The Ti content is preferably 0.0010% ~ 0.0030%.

(One or more selected from the group consisting of Mn, Ni, and Cu: 2.50% ~ 5.00% in total)

These elements are elements necessary for causing $\alpha$-$\gamma$ transformation, and thus it is necessary to contain at least one of these elements in a total amount of 2.50% or more. On the other hand, when the total content exceeds 5.00%, the cost increases and the magnetic flux density decreases in some cases. Therefore, the total content of at least one of these elements is set to 5.00% or less.

Further, the following additional conditions are set to be satisfied as the condition under which the $\alpha$-$\gamma$ transformation can occur. That is, when the Mn content (mass%) is set to [Mn], the Ni content (mass%) is set to [Ni], the Cu content (mass%) is set to [Cu], the Si content (mass%) is set to [Si], the sol. Al content (mass%) is set to [sol. Al], and the P content (mass%) is set to [P], Expression (1) below is satisfied in mass%.

$$(2 \times [Mn] + 2.5 \times [Ni] + [Cu]) - ([Si] + 2 \times [sol. Al] + 4 \times [P]) \geq 1.5\% \tag{1}$$

When Expression (1) described previously is not satisfied, the $\alpha$-$\gamma$ transformation does not occur, resulting in a low magnetic flux density.

(Co: 0.0001% ~ 1.000%)

Co is an element effective for causing $\alpha$-$\gamma$ transformation, and thus it may be contained as necessary, but when it is contained excessively, the cost increases and the magnetic flux density decreases in some cases. Therefore, the Co content is set to 1.000% or less.

(Sn: 0.000% ~ 0.400%, Sb: 0.000% ~ 0.400%)

Sn and Sb improve a texture after cold rolling and recrystallization, and increase the magnetic flux density. Therefore, these elements may be contained as necessary, but when they are contained excessively, they embrittle steel. Therefore, the Sn content and the Sb content are both set to 0.400% or less. When further effects such as magnetic properties are given as described above, it is preferable to contain one or more selected from the group consisting of Sn: 0.020% ~ 0.400% and Sb: 0.020% ~ 0.400%.

(P: 0.000% ~ 0.400%)

P may be contained in order to ensure hardness of the steel sheet after recrystallization, but when it is contained excessively, embrittlement of steel is caused. Therefore, the P content is set to 0.400% or less. When further effects such as magnetic properties are given, it is preferable to contain 0.020% ~ 0.400% of P.

Next, there is explained a method of measuring the area ratio of specific oriented grains in the non-oriented electrical steel sheet according to this embodiment. The area ratio of specific oriented grains is measured by extracting a target specific orientation (a tolerance is set to 10°, hereafter referred to as within a tolerance of 10°) from a measurement region observed by a scanning electron microscope (SEM: Scanning Electron Microscope) equipped with electron back scattering diffraction (EBSD: Electron Back Scattering Diffraction) under the following measurement conditions using OMI Analysis 7.3 (manufactured by TSL). An extracted area is divided by the area of the measurement region to find a percentage. This percentage is set to the area ratio of the specific oriented grains. Hereinafter, the "area ratio of crystal grains having a crystal orientation in a {hkl}<uvw> orientation (within a tolerance of 10°) to the measurement region" and the "area ratio of crystal grains having a crystal orientation in a {hkl} orientation (within a tolerance of 10°) to the measurement region" may be simply referred to as a "{hkl}<uvw> ratio" and a "{hkl} ratio" respectively. Hereinafter, in the description of crystal orientations, it is assumed that the tolerance is within 10°.

In the non-oriented electrical steel sheet according to this embodiment, the {411}<011> ratio is set to 15% or more when the steel sheet surface is measured by the SEM-EBSD. When the {411}<011> ratio is less than 15%, it is impossible to obtain excellent magnetic properties. Therefore, the {411}<011> ratio is set to 15% or more, and preferably set to 25% or more.

Incidentally, details of the measurement conditions for finding the area ratio of each oriented grain are as follows.

- Measuring device: SEM model number "JSM-6400 (manufactured by JEOL Ltd.)" and EBSD detector model number "HIKARI (manufactured by TSL)" are used
- Step interval: 0.3 $\mu$m (after intermediate annealing, after skin pass rolling), or 5.0 $\mu$m (after finish annealing)
- Magnification: 1000 times (after intermediate annealing, after skin pass rolling), or 100 times (after finish annealing)
- Measurement object: Center layer (sheet thickness 1/2 portion) of a Z surface in the center in the C direction of the steel sheet (cut surface of the steel sheet cut in the sheet thickness direction)
- Measurement region: Region having 1000 $\mu$m or more in the L direction and having 1000 $\mu$m or more in the C direction

Further, when the steel sheet surface is measured by the SEM-EBSD, it is preferable that the steel sheet should have a maximum intensity at $\varphi 1 = 0 \sim 10°$ among $\varphi 1 = 0 \sim 90°$ and $\Phi = 20°$, and should have a maximum intensity at $\Phi = 5$ to 35° among $\varphi 1 = 0°$ and $\Phi = 0 \sim 90°$. Having a maximum intensity at $\varphi 1 - 0 \sim 10°$ among $\varphi 1 = 0 \sim 90°$ and $\Phi = 20°$ is synonymous with having a maximum intensity near the {411}<011> orientation among the {411}<uvw> orientations. The {411}<011> orientation has excellent magnetic properties in the 45° direction, compared to {411}<148>, and so on. It is more preferable to have a maximum intensity at $\varphi 1 = 0 \sim 5°$ among $\varphi 1 = 0 \sim 90°$ and $\Phi = 20°$.

On the other hand, having a maximum intensity at $\Phi = 5 \sim 35°$ among $\varphi 1 = 0°$ and $\Phi = 0° \sim 90°$ when the steel sheet surface is measured by the SEM-EBSD is synonymous with having a maximum intensity near the {411}<011> orientation among the {hkl}<011> orientations. Since the {411}<011> orientation has excellent magnetic properties and lower stress sensitivity than the {100}<011> orientation, there is little magnetic deterioration in an interlocking core or the like. It is more preferable to have a maximum intensity at $\Phi = 20° \sim 30°$ among $\varphi 1 = 0°$ and $\Phi = 0 \sim 90°$.

There is explained a method of determining the maximum intensity in a specific orientation range of the steel sheet here. In the measurement region by the SEM-EBSD, an orientation distribution function (ODF: Orientation Distribution Function) is created under the following conditions using OIM Analysis 7.3. Then, data of the created ODF are output, and the point having a maximum ODF value within a specific orientation range (defining a range by angles of ($\varphi 1$ and $\Phi$) is set as the maximum intensity.

Further, there is explained a method of determining the ODF intensity of a specific orientation in the steel sheet. In the measurement region by the SEM-EBSD, an ODF is created under the following conditions using OIM Analysis 7.3.

Then, data of the created ODF are output, and the ODF value in a specific orientation (defining an orientation by angles of $\varphi 1$ and $\Phi$) is set as the ODF intensity.

Incidentally, the details of ODF creation conditions are as follows.

- Series Rank [L]: 16
- Gaussian Half-Width [degrees]: 5
- Sample Symmetry: Triclinic (None)
- Bunge Euler Angles: $\varphi 1 = 0° \sim 90°$, $\varphi 2 = 45°$, $\Phi = 0° \sim 90°$

Further, the area ratio of crystal grains having a specific orientation (within a tolerance of 10°) to the entire visual field when measurement is performed by the SEM-EBSD is represented as follows. When the area ratio of crystal grains having a crystal orientation in the {hkl}<uvw> orientation (within a tolerance of 10°) to the entire visual field is represented by Ahkl-uvw, and the area ratio of crystal grains having a crystal orientation in the {hkl} orientation (within a tolerance of 10°) to the entire visual field is represented by Ahkl, Expressions (2) and (3) below are both satisfied.

$$A411\text{-}011 / A411 \text{ - } 148 \geq 1.1 \quad ...(2)$$

$$A411\text{-}011 / A100 \text{ - } 011 \geq 2.0 \quad ...(3)$$

Further, the magnetic properties are superior when there are many crystal grains having a crystal orientation in the {411} orientation, but the magnetic properties are inferior when there are many crystal grains having a crystal orientation in the {111} orientation. Therefore, it is preferable that the {411} ratio should exceed the {111} ratio, and more preferably, the {411} ratio is set to equal to or more than twice the {111} ratio.

Next, the number density of precipitates in the non-oriented electrical steel sheet according to this embodiment is explained. The precipitates here are mainly fine precipitates such as TiN, and further include fine precipitates such as AlN and MnS. When the number density of the precipitates is smaller than 0.5 pieces/$\mu m^2$, the strength is insufficient. On the other hand, when the number of precipitates increases and the number density of the precipitates is greater than 50 pieces/$\mu m^2$, TiN being a precipitate becomes excessive and the magnetic properties deteriorate. Therefore, the number density of precipitates in the non-oriented electrical steel sheet is set to 0.5 pieces/$\mu m^2 \sim$ 50 pieces/$\mu m^2$.

The number density of precipitates is measured, for example, by observing a sample by an extraction replica method using a transmission electron microscope (TEM) and calculating the number density. Specifically, a transmission electron microscope is used to observe a surface at a depth position of 1/2 of a sheet thickness t from the steel sheet surface by an extraction replica method, and the number of precipitates in a visual field of 5 $\mu m \times$ 5 $\mu m$ is counted in the same sample. However, during observation, it is set not to include in the visual field, coarse precipitates (circle-equivalent diameter of 1 $\mu m$ or more) that are not included in the calculation of the number density. Then, the number of precipitates is counted in 10 or more visual fields in the same sample, and the average value of counted numbers is calculated as the number density of precipitates. Incidentally, image analysis software may be used when counting the number of precipitates.

Next, the thickness of the non-oriented electrical steel sheet according to this embodiment is explained. The sheet thickness of the non-oriented electrical steel sheet according to this embodiment is not limited in particular. A preferable sheet thickness of the non-oriented electrical steel sheet according to this embodiment is 0.25 $\sim$ 0.5 mm. Normally, as the sheet thickness decreases, the core loss decreases, but the magnetic flux density also decreases. In this regard, as long as the sheet thickness is 0.25 mm or more, the core loss is lower and the magnetic flux density is higher. Further, as long as the sheet thickness is 0.50 mm or less, a low core loss can be maintained. A more preferable lower limit value of the sheet thickness is 0.30 mm.

Further, as excellent magnetic properties in the non-oriented electrical steel sheet according to this embodiment, it is preferable that the magnetic flux density B50 in the 45° direction relative to the rolling direction should be 1.70 T or more and a core loss W10/400 in the 45° direction relative to the rolling direction should be 14 W/kg or less. Further, as for strength, a tensile strength is preferably 600 MPa or more.

Incidentally, the tensile strength is found by taking a JIS No. 5 test piece with the rolling direction of the non-oriented electrical steel sheet set as the longitudinal direction and conducting a tensile test in accordance with JIS Z2241: 2011.

The above-described non-oriented electrical steel sheet has characteristics of a non-oriented electrical steel sheet manufactured by performing finish annealing. Hereinafter, the characteristics of a non-oriented electrical steel sheet before performing finish annealing (after performing skin pass rolling) will be explained.

The non-oriented electrical steel sheet after skin pass rolling (before finish annealing) according to this embodiment has the following GOS (Grain Orientation Spread) value (Gs). Here, the GOS value is an average of orientation differences among all measurement points (pixels) in the same grain, and the GOS value is high when a crystal grain has many strains. After skin pass rolling, when the GOS value Gs is small, that is, it is in a low strain state, grain growth due to bulging easily occurs during finish annealing of the next step. Thus, the upper limit of the GOS value Gs after skin pass rolling is set to 3.0. On the other hand, when the GOS value Gs is less than 0.8, the amount of strain becomes too small, and the finish annealing time required for the grain growth due to bulging becomes long. Therefore, the GOS value Gs after skin pass rolling is set to 0.8 or more and 3.0 or less.

Here, there is explained a method of calculating Gs in the steel sheet. Analysis is performed with OIM Analysis 7.3 using the SEM-EBSD data used when the above-described crystal orientation is defined, to thereby find the number average value of the GOS value, and the value is set as Gs.

Further, in the non-oriented electrical steel sheet after skin pass rolling (before finish annealing), as an $\alpha$-fiber ratio is higher, the magnetic properties after finish annealing become more advantageous. Here, there is explained a method of measuring the $\alpha$-fiber ratio. In this embodiment, the $\alpha$-fiber is set to be in the {hkl}<011> orientation. In the measurement region by the SEM-EBSD, the {hkl}<011> orientation is extracted (within a tolerance of 10°) using OMI Analysis 7.3. An extracted area is divided by the area of the measurement region to find a percentage. This percentage is set as the $\alpha$-fiber ratio.

In the non-oriented electrical steel sheet after skin pass rolling (before finish annealing), the $\alpha$-fiber ratio is set to 20.0% or more, and is preferably 25.0% or more.

Further, in the non-oriented electrical steel sheet after skin pass rolling (before finish annealing), the ODF intensity in the {100}<011> orientation is set to 15.0 or less. Here, the ODF intensity in the {100}<011> orientation is an ODF value at $\varphi 1 = 0°$ and $\Phi = 0°$ of the ODF created using the SEM-EBSD data used when the above-described crystal orientation is defined. Since the {411}<011> orientation has excellent magnetic properties and lower stress sensitivity than the {100}<011> orientation, there is little magnetic deterioration in an interlocking core or the like. By setting the ODF intensity in the {100}<011> orientation after skin pass rolling (before finish annealing) to 15.0 or less, the {411}<011> orientation after subsequent finish annealing can be strengthened.

The non-oriented electrical steel sheet according to this embodiment can be widely applied to applications in which magnetic properties (high magnetic flux density and low core loss) are required by forming a core, and can also be applied to applications in which particularly high strength is also required, such as rotors.

Next, there is explained an example of a method of manufacturing the non-oriented electrical steel sheet according to this embodiment. In this embodiment, hot rolling, cold rolling, intermediate annealing, a second soft reduction cold rolling (hereinafter to be referred to as skin pass rolling), and finish annealing are performed.

In the hot rolling, hot rolling is performed on the steel material that satisfies the above-described chemical composition to manufacture a hot-rolled sheet. The hot rolling step includes a heating step and a rolling step.

The steel material is, for example, a slab manufactured by normal continuous casting, and the steel material having the above-described composition is manufactured by a well-known method. For example, a molten steel is manufactured in a converter, an electric furnace, or the like. The manufactured molten steel is secondarily smelted in a degassing facility or the like to obtain a molten steel having the above-described chemical composition. The molten steel is used to cast the slab by a continuous casting method or an ingot-making method. The cast slab may be bloom-rolled.

In the heating step, it is preferable to heat the steel material having the above-described chemical composition to 1100 ~ 1200°C. Specifically, the steel material is charged into a heating furnace or a soaking furnace, and heated in the furnace. A retention time at the above-described heating temperature in the heating furnace or the soaking furnace is not particularly limited, but is, for example, 30 ~ 200 hours.

In the rolling step, multiple passes of rolling are performed on the steel material heated in the heating step to manufacture a hot-rolled sheet. Here, the "pass" means that the steel sheet passes through one rolling stand having a pair of work rolls and is subjected to rolling. As the hot rolling, for example, tandem rolling may be performed using a tandem rolling mill including a plurality of rolling stands arranged in a row (each rolling stand has a pair of work rolls) to perform multiple passes of rolling, or reverse rolling having a pair of work rolls may be performed to perform multiple passes of rolling. In terms of productivity, it is preferable to perform multiple passes of rolling using the tandem rolling mill.

The rolling step consists of rough rolling at the first stage and finish rolling at the second stage, and in this embodiment, the reduction ratio in the final pass of finish rolling is set to 20% or more. By setting the reduction ratio in the final pass of finish rolling to 20% or more, it is possible to sufficiently increase the dislocation density and increase precipitation sites. As a result, the number density of precipitates in the non-oriented electrical steel sheet can be controlled within the range described previously. When the reduction ratio in the final pass of finish rolling is less than 20%, the dislocation density becomes insufficient, thus failing to control the number density of precipitates in the non-oriented electrical steel sheet within the range described previously. Therefore, the reduction ratio in the final pass of finish rolling is set to 20% or more, preferably set to 30% or more, and more preferably set to 35% or more. Incidentally, the number density of precipitates tends to increase as the reduction ratio in the final pass of finish rolling increases, but if the reduction ratio in the final pass of finish rolling is too large, the productivity decreases, and therefore, in reality, it does not occur that the number density of precipitates exceeds 50 pieces/$\mu m^2$ solely due to the reduction ratio in the final pass of finish rolling.

Here, the reduction ratio in the final pass of finish rolling is defined as follows.

Reduction ratio (%) = (1 - sheet thickness after --> final pass rolling in finish rolling/sheet thickness before final pass rolling in finish rolling) × 100

Rolling in the rolling step (rough rolling and finish rolling) is performed at a temperature in the γ region or the α + γ two-phase region (Ar1 point or higher). That is, hot rolling is performed so that the temperature when the steel sheet passes through the final pass of finish rolling (a finish rolling temperature FT (°C)) is the Ar1 point or higher. Further, the hot rolling is preferably performed so that the finish rolling temperature FT is the Ac3 point or lower. The hot rolling is performed so that the finish rolling temperature FT is the Ac3 point or lower, and thereby in combination with later-described cooling or the like, strain can be introduced into crystal grains preferably, resulting in an increase in A411-011. When the finish rolling temperature FT is greater than Ac3 point, it is impossible to preferably introduce strain into crystal grains, and as a result, desired A411-011 is not obtained in some cases.

Incidentally, the Ar1 point can be found from the changes in thermal expansion of the steel sheet during cooling at an average cooling rate of 1°C/second. Further, the Ac3 point and the later-described Ac1 point can be found from the changes in thermal expansion of the steel sheet during heating at an average temperature rising rate of 1°C/second.

Here, the finish rolling temperature FT means a surface temperature (°C) of the steel sheet on the exit side of a rolling stand where final pass reduction is performed in the above-described rolling step during the hot rolling step. The finish rolling temperature FT can be measured by, for example, a thermometer installed on the exit side of the rolling stand where final pass reduction is performed. Incidentally, the finish rolling temperature FT means an average value of temperature measurement results of 10 sections obtained by the steel sheet entire length being divided into 10 equal sections in the rolling direction, excluding one section at the leading end and one section at the trailing end, for example.

Thereafter, by transformation from austenite to ferrite due to cooling after the rolling step, high strain and moderately fine crystal grains are obtained. Cooling conditions are that the cooling is started 0.1 seconds after the steel sheet has passed through the final pass of finish rolling, and the cooling is performed so that a surface temperature of the hot-rolled sheet is 300°C or higher and the Ar1 point or lower after 3 seconds. In this way, immediate rapid cooling is not performed. By avoiding the immediate rapid cooling as described above, no special rapid cooling device is required, which is also advantageous in terms of manufacture (cost). When cold rolling is then performed at a suitable grain diameter that does not allow excessive refinement, the α-fiber develops after intermediate annealing, and after the subsequent skin pass and finish annealing, the {411}<011> orientation, which does not easily develop normally, can be developed.

In addition, it is presumed that the texture of the hot-rolled sheet becomes a structure in which unrecrystallized austenite has been transformed if immediate rapid cooling is performed and becomes a structure in which partially recrystallized austenite has been transformed if immediate rapid cooling is omitted. In the case where immediate rapid cooling is performed after finish rolling, the texture is accumulated in the {100}<011> orientation in the structure after finish annealing thereafter, and in the case where immediate rapid cooling is omitted after finish rolling, the texture is accumulated in the {411}<011> orientation in the structure after finish annealing thereafter. Thus, transforming partially recrystallized austenite is considered important to strengthen the {411}<011> orientation.

Here, the cooling conditions are preferably such that the average crystal grain diameter in the hot-rolled sheet before cold rolling is 3 to 10 μm. If the crystal grains are coarsened excessively, it becomes difficult for the α-fiber to develop after cold rolling and intermediate annealing, and a desired {411}<011> ratio is not obtained in some cases. Further, if the crystal grains are refined excessively, a desired {411}<011> ratio is not obtained. Therefore, in order to achieve an average crystal grain diameter of 3 ~ 10 μm in the hot-rolled sheet before cold rolling, the temperature is set to a temperature of the Ar1 point or lower within 3 seconds after the steel sheet has passed through the final pass of finish rolling. As for the method of measuring the grain diameter, the grain diameter is measured by an intercept method, for example.

Further, the surface temperature of the hot-rolled sheet 3 seconds after the steel sheet has passed through the final pass of finish rolling is measured by the following method. At a hot-rolling facility line of electrical steel sheets, a cooling device and a transfer line (for example, a transfer roller) are arranged downstream of a hot rolling mill. A thermometer that measures the surface temperature of the hot-rolled sheet is arranged on the exit side of the rolling stand where the final pass in the hot rolling mill is performed. Further, a plurality of thermometers are also arranged along the transfer line at the transfer roller arranged downstream of the rolling stand. The cooling device is arranged downstream of the rolling stand where the final pass is performed. On the entry side of a water-cooling device, a thermometer is arranged. The cooling device may be, for example, a well-known water-cooling device or a well-known forced air cooling device. Preferably, the cooling device is the water-cooling device. The coolant of the water-cooling device may be water or a mixed fluid of water and air.

The temperature of the hot-rolled sheet is measured using the thermometer arranged at the hot-rolling facility line. Then, the temperature 3 seconds after the steel sheet has passed through the final pass of finish rolling is found.

Thereafter, coiling is performed without performing hot-rolled sheet annealing, and cold rolling is performed on the hot-rolled sheet. Incidentally, the hot-rolled sheet annealing mentioned here means, for example, a heat treatment with a temperature rising temperature of the Ac1 point or lower and 300°C or higher.

Without performing the hot-rolled sheet annealing on the hot-rolled sheet, cold rolling is performed on the hot-rolled sheet. As the cold rolling, for example, tandem rolling may be performed using a tandem rolling mill including a plurality of rolling stands arranged in a row (each rolling stand has a pair of work rolls) to perform multiple passes of rolling. Further, reverse rolling may be performed using a Sendzimir rolling mill or the like including a pair of work rolls to perform one pass or multiple passes of rolling. In terms of productivity, it is preferable to perform multiple passes of rolling using the tandem rolling mill.

In the cold rolling, cold rolling is performed without performing an annealing treatment in the middle of the cold rolling. For example, in the case where reverse rolling is performed and multiple passes of cold rolling are performed, the multiple passes of cold rolling are performed without performing an annealing treatment between the passes of cold rolling. Incidentally, only one pass of cold rolling may be performed using a reverse-type rolling mill. Further, in the case where cold rolling is performed using a tandem-type rolling mill, cold rolling is performed continuously in multiple passes (passes of respective rolling stands).

In this embodiment, a reduction ratio RR1 (%) in the cold rolling is preferably set to 75 ~ 95%. Here, the reduction ratio RR1 is defined as follows.

Reduction ratio RR1 (%) = (1 - sheet thickness after final pass rolling in cold rolling/sheet thickness before first pass rolling in cold rolling) $\times$ 100

When the cold rolling is finished, intermediate annealing is subsequently performed. In this embodiment, it is preferable to control an intermediate annealing temperature T1 (°C) to the Ac1 point or lower. When the intermediate annealing temperature exceeds the Ac1 point, a part of the structure of the steel sheet is transformed to austenite and the strain in the steel sheet decreases excessively. Incidentally, if the intermediate annealing temperature is too low, recrystallization does not occur, and the grains in the {411}<011> orientation do not grow sufficiently during the subsequent skin pass rolling and finish annealing, and the magnetic flux density does not increase in some cases. Therefore, it is preferable to set the intermediate annealing temperature T1 (°C) to 600°C or higher.

Here, the intermediate annealing temperature T1 (°C) is the sheet temperature (the temperature of the steel sheet surface) near an extraction port of an annealing furnace. The sheet temperature at the annealing furnace can be measured by a thermometer arranged at the extraction port of the annealing furnace.

Incidentally, the retention time at the intermediate annealing temperature T1 in the intermediate annealing step may be any time well known to those skilled in the art. The retention time at the intermediate annealing temperature T1 is, for example, 5 ~ 60 seconds, but the retention time at the intermediate annealing temperature T1 is not limited to this. Further, a temperature rising rate up to the intermediate annealing temperature T1 may also be a well-known condition. The temperature rising rate up to the intermediate annealing temperature T1 is, for example, 10.0 ~ 20.0°C/second, but the temperature rising rate up to the intermediate annealing temperature T1 is not limited to this.

The atmosphere during the intermediate annealing is not particularly limited, but for the atmosphere during the intermediate annealing, for example, an atmosphere gas (dry) containing 20% $H_2$ with a balance consisting of $N_2$ is used. The cooling rate of the steel sheet after the intermediate annealing is not particularly limited, and is, for example, 5.0 ~ 60.0°C/second.

When up to the intermediate annealing is finished under the conditions described above, a cold-rolled steel sheet obtained has an $\alpha$-fiber ratio (within a tolerance of 10°) of 15% or more when measured by the SEM-EBSD. As above, in order to achieve 15.0% or more of the $\alpha$-fiber ratio (within a tolerance of 10°) at a stage before the skin pass rolling, it is necessary to have the $\alpha$-$\gamma$ transformation system composition (high concentration of $\gamma$ former elements of Mn, Ni, and Cu, hereinafter referred to as high Mn, and the like) and perform the steps from hot rolling to intermediate annealing under the conditions described previously, and particularly, the cooling conditions after the finish rolling are important. The $\alpha$-fiber, which easily produces the {411}<011> orientation, is developed by transformation from partially recrystallized austenite to ferrite, cold rolling the hot-rolled sheet having an average grain diameter of 3 to 10 $\mu$m after hot rolling, and then intermediate annealing the steel sheet. As described previously, when the immediate rapid cooling is performed, the structure becomes the structure in which unrecrystallized austenite has been transformed, and does not become the structure in which partially recrystallized austenite has been transformed. The cold-rolled steel sheet manufactured in this manner is subjected to skin pass rolling under later-described conditions, and further subjected to finish annealing, and thereby the non-oriented electrical steel sheet of the present invention is obtained.

When the intermediate annealing is finished, skin pass rolling is next performed. Specifically, rolling (cold rolling) is performed on the cold-rolled steel sheet after the intermediate annealing step at normal temperature in the atmosphere. Here, for the skin pass rolling, for example, the reverse rolling mill such as the above-described Sendzimir rolling mill or the tandem rolling mill is used.

In the skin pass rolling, rolling is performed without performing an annealing treatment in the middle. For example, in the case where the reverse rolling is performed and the skin pass rolling is performed in multiple passes, multiple passes of rolling are performed without performing an annealing treatment between the passes. Incidentally, only one pass of skin pass rolling may be performed using the reverse-type rolling mill. Further, when the skin pass rolling is performed using the tandem-type rolling mill, rolling is performed continuously in multiple passes (passes of respective rolling stands).

As described above, in this embodiment, after strain is introduced into the steel sheet by the hot rolling and the cold rolling, the strain introduced into the steel sheet is temporarily reduced by the intermediate annealing. Then, the skin pass rolling is performed. Thereby, the intermediate annealing is performed while reducing the strain introduced excessively by the cold rolling in the intermediate annealing, thereby inhibiting preferential recrystallization of {111} grains in the steel sheet surface and allowing the {411}<011> oriented crystal grains to remain. Then, in the skin pass rolling, an appropriate amount of strain is introduced into each crystal grain in the steel sheet, to bring the steel sheet into a state in which grain growth due to bulging is likely to occur in the finish annealing of the next step.

In this embodiment, a reduction ratio RR2 in the skin pass rolling is set to 5 ~ 20%. Here, the reduction ratio RR2 is defined as follows.

Reduction ratio RR2 (%) = (1 - sheet thickness after final pass rolling in skin pass rolling/sheet thickness before first pass rolling in skin pass rolling) $\times$ 100

Here, when the reduction ratio RR2 is less than 5%, the amount of strain becomes too small, and the finish annealing time required for the grain growth due to bulging becomes long. Further, when the reduction ratio RR2 exceeds 20%, the amount of strain becomes too large, and normal grain growth occurs in place of bulging and {411}<148> and {111}<011> grow during the finish annealing. Therefore, the reduction ratio RR2 is set to 5 ~ 20%.

The number of passes in the skin pass rolling may be only one pass (that is, only one rolling), or may be multiple passes of rolling.

As described previously, the GOS value and the $\alpha$-fiber ratio described previously can be obtained by causing recrystallization in the steel sheet having the $\alpha$-$\gamma$ transformation system composition (high Mn, and the like) by the intermediate annealing and performing the skin pass rolling under the conditions described above.

After the skin pass rolling, finish annealing is performed at 750°C or higher and the Ac1 point or lower for 2 hours or longer. When a finish annealing temperature T2 (°C) is set to less than 750°C, the grain growth due to bulging does not occur sufficiently. In this case, the degree of accumulation of the {411}<011> orientation decreases. Further, when the finish annealing temperature T2 is higher than the Ac1 point, a part of the structure of the steel sheet is transformed to austenite, the grain growth due to bulging does not occur, and a desired {411}<011> ratio is not obtained. Further, when the annealing time is less than 2 hours, even if the finish annealing temperature T2 is 750°C or higher and the Ac1 point or lower, the grain growth due to bulging does not occur sufficiently, and the degree of accumulation of the {411}<011> orientation decreases. Incidentally, the upper limit of the annealing time for the finish annealing is not particularly limited, but a preferable upper limit is 10 hours because the effect is saturated if the annealing time exceeds 10 hours.

Here, the finish annealing temperature T2 is set to the sheet temperature (the temperature of the steel sheet surface) near an extraction port of an annealing furnace. The furnace temperature of the annealing furnace can be measured by a thermometer arranged at the extraction port of the annealing furnace.

Incidentally, a temperature rising rate TR2 up to the finish annealing temperature T2 in the finish annealing step may be any temperature rising rate well known to those skilled in the art, and a retention time $\Delta t2$ (sec) at the finish annealing temperature T2 may also be any time well known to those skilled in the art. Here, the retention time $\Delta t2$ means the retention time after the surface temperature of the steel sheet reaches the finish annealing temperature T2.

A preferable temperature rising rate TR2 up to the finish annealing temperature T2 in the finish annealing step is set to 0.1°C/second or more and less than 10.0°C/second. As long as the temperature rising rate TR2 is 0.1°C/second or more and less than 10.0°C/second, the grain growth due to bulging occurs sufficiently. In this case, the degree of accumulation of the {411}<011> crystal orientation further increases, and the crystal grains in the ND plane at the center position of the sheet thickness are also further less likely to vary.

The temperature rising rate TR2 is found by the following method. A thermocouple is attached to the steel sheet having the above-described chemical composition and obtained by performing the steps from the hot rolling to the skin pass, thereby obtaining a sample steel sheet. Temperature rises in the sample steel sheet with the thermocouple attached thereto, and the time from when the temperature rising starts until the temperature reaches the finish annealing temperature T2 is measured. The temperature rising rate TR2 is found based on the measured time.

The retention time $\Delta t2$ at the finish annealing temperature T2 in the finish annealing step is 2 hours or longer. As long as the retention time $\Delta t2$ is 2 hours or longer, the grain growth of the {411}<110> grains occurs due to bulging, and the strength is increased by grain refining strengthening. In this case, the degree of accumulation of the {411}<011> crystal orientation further increases, and the crystal grains in the ND plane at the center position of the sheet thickness are also further less likely to vary. The lower limit of the retention time $\Delta t2$ is 2 hours, and preferably 3 hours. As described previously, a preferable upper limit of the retention time $\Delta t2$ is 10 hours, and more preferably 5 hours.

The atmosphere during the finish annealing step is not particularly limited. For example, an atmosphere gas (dry) containing 20% $H_2$ with a balance consisting of $N_2$ is used for the atmosphere during the finish annealing step. The cooling rate of the steel sheet after the finish annealing is not limited in particular. The cooling rate is 5 ~ 20°C/second, for example.

Incidentally, the non-oriented electrical steel sheet obtained after the skin pass rolling may be shipped without being subjected to the finish annealing. For example, the steps up to the skin pass rolling may be performed at a steel sheet manufacturer, and punching or stacking of the non-oriented electrical steel sheet may be performed at a core manufacturer, which is a shipping destination, and then strain relief annealing may be performed in place of the finish annealing under the conditions of the annealing temperature of 750°C or higher and the Ac1 point or lower and the annealing time of 2 hours or longer.

As described above, the non-oriented electrical steel sheet according to this embodiment can be manufactured.

The method of manufacturing the non-oriented electrical steel sheet according to this embodiment is not limited to the above-described manufacturing steps.

For example, in the above-described manufacturing steps, shot blasting and/or pickling may be performed after hot rolling and before cold rolling. In the shot blasting, shot blasting is performed on the steel sheet after hot rolling to destroy and remove scales formed on the surface of the steel sheet after hot rolling. In the pickling, a pickling treatment is performed on the steel sheet after hot rolling. For example, an aqueous hydrochloric acid solution is used as a pickling bath for the pickling treatment. Scales formed on the surface of the steel sheet are removed by pickling. Shot blasting may be performed after hot rolling and before cold rolling, and then pickling may be performed. Further, after hot rolling and before cold rolling, pickling may be performed without performing shot blasting. After hot rolling and before cold rolling, shot blasting may be performed without performing pickling. Incidentally, the shot blasting and the pickling are optional steps. Therefore, it is not necessary to perform both the shot blasting step and the pickling step after hot rolling and before cold rolling.

The method of manufacturing the electrical steel sheet according to this embodiment may further include coating after finish annealing. In the coating, an insulating coating film is formed on the surface of the steel sheet after finish annealing.

The type of insulating coating film is not particularly limited. The insulating coating film may be an organic component or an inorganic component, and the insulating coating film may contain an organic component and an inorganic component. The inorganic component is, for example, dichromate-boric acid-based, phosphoric acid-based, silica-based, and so on. The organic component is, for example, general resins based on acrylic, acrylic styrene, acrylic silicon, silicon, polyester, epoxy, and fluorine. When coatability is considered, a preferable resin is an emulsion-type resin. Insulating coating that exhibits adhesive performance when heated and/or pressurized may be applied. The insulating coating having adhesive performance is, for example, resins based on acrylic, phenol, epoxy, and melamine.

Incidentally, the coating is an optional step. Therefore, it is not necessary to perform the coating after finish annealing.

Incidentally, the non-oriented electrical steel sheet according to this embodiment is not limited to the above-described manufacturing method. The manufacturing method is not limited to the above, as long as the area ratio of crystal grains having the {411}<011> orientation (within a tolerance of 10°) to the entire visual field when the steel sheet surface is measured by electron back scattering diffraction (EBSD) is 15% or more, and the number density of precipitates is 0.5 pieces/$\mu m^2$ ~ 50 pieces/$\mu m^2$.

EXAMPLE

Next, the non-oriented electrical steel sheet according to the embodiment of the present invention will be specifically explained with reference to examples. The examples to be explained below are merely examples of the non-oriented electrical steel sheet according to the embodiment of the present invention, and the non-oriented electrical steel sheet according to the present invention is not limited to the examples below.

(First example)

A molten steel was cast to fabricate an ingot containing components illustrated in Table 1 below. Here, the expression left side represents the value of the left side of (1) Expression described previously. The fabricated ingot was then heated up to a slab heating temperature ST illustrated in Table 1 and hot rolled, and finish rolled at the finish rolling temperature FT illustrated in Table 1. Then, after passing through the final pass, cooling was performed under the cooling conditions illustrated in Table 1 (for the time from when the steel sheet passes through the final pass to when cooling is started, and at the temperature of the steel sheet 3 seconds after the steel sheet has passed through the final pass).

Then, on a hot-rolled steel sheet, hot-rolled sheet annealing was not performed, scales were removed by pickling, and cold rolling was performed at the reduction ratio RR1 illustrated in Table 1. Then, intermediate annealing was performed in an atmosphere of 20% hydrogen and 80% nitrogen, and the intermediate annealing temperature T1 was controlled to the temperature illustrated in Table 1, and the intermediate annealing was performed for 30 seconds.

Next, except for No. 11, skin pass rolling was performed at the reduction ratio RR2 illustrated in Table 1. Then, finish annealing was performed in a 100% hydrogen atmosphere at the finish annealing temperature T2 illustrated in Table 1. At this time, the retention time $\Delta t2$ at the finish annealing temperature T2 was set to 2 hours. Incidentally, before performing the finish annealing, the GOS value Gs was calculated under the measurement conditions described previously.

Further, in order to examine the texture obtained after the finish annealing, a part of the steel sheet was cut out, and the thickness of a cutout test piece was reduced to 1/2. The {411}<011> ratio was found by performing observation in a measurement region by the SEM-EBSD under the measurement conditions described previously. Further, the number density of precipitates was found by observing the precipitates under the measurement conditions described previously by a transmission electron microscope with an accelerating voltage of 200 kV. The results are illustrated in Table 2.

Further, in order to examine the magnetic properties and the tensile strength obtained after the finish annealing, the magnetic flux density B50 and the core loss W10/400 were measured, and at the same time, a core loss deterioration ratio of the core loss W10/50 under compressive stress was found as an index of stress sensitivity. As for the magnetic flux density B50, as a measurement sample, 55 mm square samples were taken in two directions of 0° and 45° relative to the rolling direction. Then, these two types of samples were measured, and the value in the 45° direction relative to the rolling direction was set as the magnetic flux density B50 in the 45° direction, and the average value of the values in the 0° direction, 45° direction, 90° direction, and 135° direction relative to the rolling direction was set as the all-around average of the magnetic flux density B50. As for the core loss W10/400, samples taken in the 45° direction relative to the rolling direction from the above-described measurement samples were used, and the average value in the 45° direction was found. Further, as for a core loss deterioration ratio $W_x$ [%] of the core loss W10/50 under compressive stress, when the core loss W10/50 without stress was set to W10/50 (0) and the core loss W10/50 under a compressive stress of 10 MPa was set to W10/50 (10), the core loss deterioration ratio $W_x$ was calculated by the following equation. As for the tensile strength, a JIS No. 5 test piece was taken with the rolling direction of the steel sheet set as the longitudinal direction and the tensile strength was found in a tensile test in accordance with JIS Z2241: 2011. The measurement results are illustrated in Table 2.

$$W_x = \{W10/50\ (10) - W10/50\ (0)\}/W10/50\ (0)$$

[Table 1]

| ITEM | CHEMICAL COMPOSITION (BALANCE IS Fe AND IMPURITIES) | | | | | | | | | | | | | EXPRESSION LEFT SIDE | TRANSFORMATION POINT | | | HOT ROLLING STEP | | | | | COLD ROLLING STEP | INTERMEDIATE ANNEALING STEP | SKIN PASS ROLLING STEP | FINISH ANNEALING STEP | |
|---|---|---|---|---|---|---|---|---|---|---|---|---|---|---|---|---|---|---|---|---|---|---|---|---|---|---|---|
| No. | C | Si | sol.Al | S | N | Ti | Mn | Ni | Cu | Co | Sn | Sb | P | | Ar1 POINT | Ac1 POINT | Ac3 POINT | SLAB HEATING TEMPERATURE ST | FINAL PASS REDUCTION RATIO | FINISH ROLLING TEMPERATURE FT | COOLING START | TEMPERATURE AFTER 3 SECONDS | COLD ROLLING REDUCTION RATIO RR1 | INTERMEDIATE ANNEALING TEMPERATURE T1 | SKIN PASS ROLLING REDUCTION RATIO RR2 | FINISH ANNEALING TEMPERATURE T2 | CLASSIFICATION |
| | [wt%] | [wt%] | [wt%] | [wt%] | [wt%] | [wt%] | [wt%] | [wt%] | [wt%] | [wt%] | [wt%] | [wt%] | [wt%] | | [°C] | [°C] | [°C] | [°C] | [%] | [°C] | SECOND | [°C] | [%] | [°C] | [%] | [°C] | |
| 1 | 0.0018 | 2.5 | 0.005 | 0.0018 | 0.0011 | 0.0015 | 3.0 | 0 | 0 | 0 | 0 | 0 | 0.020 | 3.41 | 779 | 932 | 982 | 1150 | 37 | 950 | 0.10 | 700 | 86 | 700 | 15 | 800 | INVENTION EXAMPLE |
| 2 | 0.0018 | 2.5 | 0.005 | 0.0018 | 0.0011 | 0 | 3.0 | 0 | 0 | 0 | 0 | 0 | 0.020 | 3.41 | 779 | 932 | 982 | 1150 | 31 | 950 | 0.10 | 200 | 86 | 700 | 15 | 800 | COMPARATIVE EXAMPLE |
| 3 | 0.0018 | 2.5 | 0.300 | 0.0018 | 0.0011 | 0.0020 | 2.0 | 0 | 0 | 0 | 0 | 0 | 0.020 | 0.82 | - | - | - | 1150 | 30 | 950 | 0.10 | 700 | 86 | 700 | 15 | 800 | COMPARATIVE EXAMPLE |
| 4 | 0.0012 | 2.4 | 0.120 | 0.0015 | 0.0014 | 0.0020 | 2.8 | 0.2 | 0 | 0 | 0.03 | 0.01 | 0.010 | 3.42 | 777 | 929 | 979 | 1150 | 36 | 950 | 0.50 | 400 | 86 | 700 | 15 | 800 | INVENTION EXAMPLE |
| 5 | 0.0018 | 2.5 | 0.005 | 0.0018 | 0.0011 | 0.0070 | 3.0 | 0 | 0 | 0 | 0 | 0 | 0.020 | 3.41 | 779 | 932 | 982 | 1150 | 34 | 650 | 0.10 | 550 | 86 | 700 | 15 | 800 | COMPARATIVE EXAMPLE |
| 6 | 0.0009 | 2.5 | 0.070 | 0.0008 | 0.0008 | 0.0015 | 3.5 | 0 | 0.2 | 0.2 | 0 | 0.11 | 0.080 | 4.24 | 657 | 780 | 850 | 1150 | 34 | 850 | 0.08 | 600 | 86 | 700 | 15 | 750 | COMPARATIVE EXAMPLE |
| 7 | 0.0009 | 2.8 | 0.400 | 0.0008 | 0.0010 | 0.0010 | 4.0 | 0 | 0 | 0 | 0 | 0.11 | 0.100 | 4.00 | 697 | 894 | 973 | 1150 | 36 | 850 | 0.12 | 600 | 86 | 700 | 15 | 800 | INVENTION EXAMPLE |
| 8 | 0.0012 | 2.6 | 0.500 | 0.0015 | 0.0014 | 0.0050 | 2.6 | 0 | 0.2 | 0 | 0.15 | 0 | 0.010 | 1.76 | 953 | 1059 | 1088 | 1150 | 39 | 950 | 0.50 | 400 | 86 | 700 | 15 | 800 | INVENTION EXAMPLE |
| 9 | 0.0012 | 1.0 | 0.005 | 0.0015 | 0.0014 | 0 | 2.5 | 0 | 0 | 0 | 0.15 | 0 | 0.010 | 3.95 | 673 | 820 | 848 | 1150 | 28 | 950 | 0.50 | 400 | 86 | 700 | 15 | 800 | COMPARATIVE EXAMPLE |
| 10 | 0.0012 | 3.5 | 0.800 | 0.0015 | 0.0014 | 0.0015 | 5.2 | 0 | 0 | 0 | 0.15 | 0 | 0.010 | 5.26 | 633 | 760 | 812 | 1150 | 31 | 850 | 0.12 | 400 | 86 | 700 | 15 | 750 | COMPARATIVE EXAMPLE |
| 11 | 0.0022 | 3.4 | 0.020 | 0.0042 | 0.0023 | 0.0015 | 3.7 | 0 | 0 | 0 | 0 | 0 | 0.006 | 3.94 | 699 | 897 | 975 | 1150 | 30 | 950 | 0.10 | 650 | 86 | 700 | 0 | 800 | COMPARATIVE EXAMPLE |
| 12 | 0.0022 | 3.4 | 0.020 | 0.0042 | 0.0023 | 0.0015 | 3.7 | 0 | 0 | 0 | 0 | 0 | 0.006 | 3.94 | 699 | 897 | 975 | 1150 | 32 | 950 | 0.10 | 650 | 86 | 700 | 25 | 800 | COMPARATIVE EXAMPLE |
| 13 | 0.0009 | 2.5 | 0.700 | 0.0008 | 0.0010 | 0.0002 | 4.0 | 0 | 0 | 0 | 0 | 0.11 | 0.100 | 3.70 | 759 | 908 | 957 | 1000 | 27 | 850 | 0.12 | 600 | 86 | 700 | 15 | 800 | COMPARATIVE EXAMPLE |
| 14 | 0.0008 | 2.8 | 0.400 | 0.0008 | 0.0010 | 0.0010 | 4.0 | 0 | 0 | 0 | 0.01 | 0 | 0.100 | 4.00 | 697 | 894 | 973 | 1150 | 13 | 850 | 0.12 | 600 | 86 | 700 | 20 | 800 | COMPARATIVE EXAMPLE |

14

[Table 2]

| No. | AFTER SKIN PASS | TEXTURE AFTER FINISH ANNEALING | SHEET THICKNESS | PRECIPITATE | MAGNETIC PROPERTIES | | | | MECHANICAL PROPERTIES | CLASSIFICATION |
|---|---|---|---|---|---|---|---|---|---|---|
| | Gs | {411}<011> AREA RATIO | | NUMBER DENSITY | B50 (ALL-AROUND) | B50 (45°) | W10/400 (45°) | CORE LOSS DETERIORATION RATIO | TENSILE STRENGTH | |
| | [-] | [%] | [mm] | [PIECE/μm²] | [T] | [T] | [W/kg] | [%] | [MPa] | |
| 1 | 2.2 | 24.3 | 0.3 | 11.3 | 1.64 | 1.79 | 12.0 | 31.3 | 655 | INVENTION EXAMPLE |
| 2 | 1.7 | 11.2 | 0.3 | 0.3 | 1.62 | 1.73 | 12.7 | 50.7 | 566 | COMPARATIVE EXAMPLE |
| 3 | 2.1 | 8.3 | 0.3 | 14.1 | 1.65 | 1.60 | 14.3 | 54.5 | 666 | COMPARATIVE EXAMPLE |
| 4 | 2.3 | 22.7 | 0.3 | 15.6 | 1.74 | 1.70 | 13.2 | 28.9 | 670 | INVENTION EXAMPLE |
| 5 | 2.6 | 9.2 | 0.3 | 51.1 | 1.58 | 1.56 | 18.1 | 46.2 | 766 | COMPARATIVE EXAMPLE |
| 6 | 1.8 | 12.5 | 0.3 | 12.0 | 1.62 | 1.73 | 12.9 | 50.7 | 664 | COMPARATIVE EXAMPLE |
| 7 | 2.1 | 28.9 | 0.3 | 0.8 | 1.64 | 1.72 | 13.1 | 30.5 | 621 | INVENTION EXAMPLE |
| 8 | 2.0 | 16.3 | 0.3 | 42.7 | 1.61 | 1.70 | 13.4 | 30.4 | 748 | INVENTION EXAMPLE |
| 9 | 2.0 | 27.5 | 0.3 | 0.2 | 1.67 | 1.74 | 15.4 | 30.1 | 537 | COMPARATIVE EXAMPLE |
| 10 | 2.3 | 25.6 | 0.3 | 9.5 | 1.51 | 1.48 | 13.2 | 31.9 | 644 | COMPARATIVE EXAMPLE |
| 11 | 0.2 | 11.4 | 0.3 | 6.6 | 1.58 | 1.60 | 14.3 | 52.1 | 633 | COMPARATIVE EXAMPLE |
| 12 | 3.1 | 12.1 | 0.3 | 8.1 | 1.57 | 1.63 | 14.4 | 33.5 | 640 | COMPARATIVE EXAMPLE |
| 13 | 2.1 | 27.5 | 0.3 | 0.2 | 1.64 | 1.72 | 13.1 | 30.5 | 548 | COMPARATIVE EXAMPLE |
| 14 | 2.6 | 27.8 | 0.3 | 0.4 | 1.63 | 1.71 | 13.0 | 30.7 | 592 | COMPARATIVE EXAMPLE |

The underlines in Table 1 and Table 2 indicate conditions that are outside the range of the present invention. No. 1, No. 4, No. 7, and No. 8 being an invention example all had good values for the magnetic flux density B50, the core loss W10/400, the core loss deterioration ratio, and the tensile strength.

On the other hand, in No. 2 being a comparative example, rapid cooling was performed after finish rolling, and thus the {411}<011> ratio was small and the core loss deterioration ratio under compressive stress was large. Further, Ti was not contained, and thus precipitates mainly formed of TiN were not generated, and an overall lack of precipitates resulted in insufficient tensile strength. In No. 3 being a comparative example, the total amount of one or more selected from the group consisting of Mn, Ni, and Cu was insufficient, and the composition was a composition in which $\alpha$-$\gamma$ transformation did not occur, and thus the {411}<011> ratio was small, and the magnetic flux density B50 (45° direction), the core loss W10/400, and the core loss deterioration ratio were poor. In No. 5 being a comparative example, the finish rolling temperature FT was lower than the Ar1 point, and thus the {411}<011> ratio was small, and further, Ti was contained excessively, and thus the magnetic flux density B50 (45° direction), the core loss W10/400, and the core loss deterioration ratio were poor. In No. 6 being a comparative example, the time from when the steel sheet passed through the final pass of finish rolling to the start of cooling was too short, and thus the {411}<011> ratio was small and the core loss deterioration ratio under compressive stress was large.

No. 9 being a comparative example had a large core loss W10/400 due to lack of Si. Further, Ti was not contained, and thus precipitates mainly formed of TiN were not generated, and an overall lack of precipitates resulted in insufficient tensile strength. In No. 10 being a comparative example, the total amount of one or more selected from the group consisting of Mn, Ni, and Cu was excessive, and thus the magnetic flux density B50 was poor both in the 45° direction and the all-around average. In addition, due to segregation, lamination occurred in a part during cold rolling. In No. 11 being a comparative example, skin pass rolling was not performed, and thus the {411}<011> ratio was small, and the magnetic flux density B50 (45° direction), the core loss W10/400, and the core loss deterioration ratio were poor. In No. 12 being a comparative example, the reduction ratio RR2 in skin pass rolling was too large, and thus the {411}<011> ratio was small, and the magnetic flux density B50 (45° direction) and the core loss W10/400 were poor. In No. 13 being a comparative example, the slab heating temperature ST was too low, and thus the precipitates, including precipitates mainly formed of TiN, were insufficient overall, resulting in that the tensile strength was insufficient. In No. 14 being a comparative example, the reduction ratio in the final pass of hot rolling (finish rolling) was less than 20%, and thus precipitates were insufficient overall, resulting in that the tensile strength was insufficient.

INDUSTRIAL APPLICABILITY

According to the present invention, it is possible to provide a non-oriented electrical steel sheet that has achieved both high strength and high magnetic flux density without increasing a manufacturing load, and the present invention has a significant industrial value.

**Claims**

1.   A non-oriented electrical steel sheet, comprising a chemical composition containing:

in mass%,
C: 0.010% or less;
Si: 1.50% ~ 4.00%;
sol. Al: 0.0001% ~ 1.0000%;
S: 0.010% or less;
N: 0.0005% ~ 0.0100%;
Ti: 0.0010% ~ 0.0050%;
one or more selected from the group consisting of Mn, Ni, and Cu: 2.50% ~ 5.00% in total;
Co: 0.000% ~ 1.000%;
Sn: 0.000% ~ 0.400%;
Sb: 0.000% ~ 0.400%; and
P: 0.000% ~ 0.400%, and
satisfying (1) Expression below when the Mn content (mass%) is set to [Mn], the Ni content (mass%) is set to [Ni], the Cu content (mass%) is set to [Cu], the Si content (mass%) is set to [Si], the sol. Al content (mass%) is set to [sol. Al], and the P content (mass%) is set to [P], and
having a balance consisting of Fe and impurities, wherein
when an area ratio of crystal grains in a {hkl}<uvw> orientation (within a tolerance of 10°) to the entire visual field when a steel sheet surface is measured by a scanning electron microscope equipped with electron back scattering diffraction (SEM-EBSD) is represented as Ahkl-uvw, A411-011 is 15% or more, and
the number density of precipitates is 0.5 pieces/$\mu m^2$ ~ 50 pieces/$\mu m^2$.

$(2 \times [Mn] + 2.5 \times [Ni] + [Cu]) - ([Si] + 2 \times [sol. Al] + 4 \times [P]) \geq 1.5\%$ ...                    (1)

## INTERNATIONAL SEARCH REPORT

| International application No. |
|---|
| **PCT/JP2023/034057** |

| A. | CLASSIFICATION OF SUBJECT MATTER |
|---|---|

*C21D 8/12*(2006.01)n; ***C22C 38/00***(2006.01)i; ***C22C 38/60***(2006.01)i; ***H01F 1/147***(2006.01)i
FI:   C22C38/00 303U; C22C38/60; H01F1/147 175; C21D8/12 A

According to International Patent Classification (IPC) or to both national classification and IPC

| B. | FIELDS SEARCHED |
|---|---|

Minimum documentation searched (classification system followed by classification symbols)

C21D8/12; C21D9/46; C22C38/00-C22C38/60; H01F1/147

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2021/205880 A1 (NIPPON STEEL CORP.) 14 October 2021 (2021-10-14)<br>claims, paragraph [0026], first example, second example, forth example | 1 |
| A | JP 2020-76138 A (NIPPON STEEL CORP.) 21 May 2020 (2020-05-21)<br>entire text | 1 |
| A | JP 2006-219692 A (NIPPON STEEL CORP.) 24 August 2006 (2006-08-24)<br>entire text | 1 |
| A | WO 2020/153387 A1 (JFE STEEL CORP.) 30 July 2020 (2020-07-30)<br>entire text, all drawings | 1 |
| A | JP 2019-19355 A (NIPPON STEEL & SUMITOMO METAL CORP.) 07 February 2019 (2019-02-07)<br>entire text, all drawings | 1 |
| A | CN 110172561 A (JIANGXI UNIVERSITY OF SCIENCE AND TECHNOLOGY) 27 August 2019 (2019-08-27)<br>entire text, all drawings | 1 |

☑ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 November 2023** | **19 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| --- |
| **PCT/JP2023/034057** |

### C.     DOCUMENTS CONSIDERED TO BE RELEVANT

| Category* | Citation of document, with indication, where appropriate, of the relevant passages | Relevant to claim No. |
| --- | --- | --- |
| P, X | WO 2022/210998 A1 (NIPPON STEEL CORP.) 06 October 2022 (2022-10-06) claims, examples | 1 |

Form PCT/ISA/210 (second sheet) (January 2015)

## INTERNATIONAL SEARCH REPORT
### Information on patent family members

International application No.

**PCT/JP2023/034057**

| Patent document cited in search report | | | Publication date (day/month/year) | Patent family member(s) | | | Publication date (day/month/year) |
|---|---|---|---|---|---|---|---|
| WO | 2021/205880 | A1 | 14 October 2021 | US | 2023/0106818 | A1 | |
| | | | | claims, paragraphs [0054], [0055], examples 1, 2, 4 | | | |
| | | | | EP | 4134456 | A1 | |
| | | | | TW | 202138582 | A | |
| | | | | CN | 115315536 | A | |
| | | | | KR | 10-2022-0142512 | A | |
| | | | | BR | 112022018384 | A2 | |
| JP | 2020-76138 | A | 21 May 2020 | (Family: none) | | | |
| JP | 2006-219692 | A | 24 August 2006 | (Family: none) | | | |
| WO | 2020/153387 | A1 | 30 July 2020 | US | 2022/0064751 | A1 | |
| | | | | entire text, all drawings | | | |
| | | | | EP | 3916113 | A1 | |
| | | | | TW | 202028480 | A | |
| | | | | KR | 10-2021-0099111 | A | |
| | | | | CN | 113366124 | A | |
| | | | | CA | 3127170 | A1 | |
| | | | | MX | 2021008802 | A | |
| | | | | RU | 2771133 | C1 | |
| JP | 2019-19355 | A | 07 February 2019 | (Family: none) | | | |
| CN | 110172561 | A | 27 August 2019 | (Family: none) | | | |
| WO | 2022/210998 | A1 | 06 October 2022 | TW | 202246539 | A | |
| | | | | claims, examples | | | |
| | | | | KR | 10-2023-0118709 | A | |
| | | | | CN | 116848279 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022151497 A
- JP 2017145462 A
- JP 2017193731 A
- JP 2019178380 A
- JP 4218077 B
- JP 5256916 B
- JP 2011111658 A
- JP 2019183185 A